# EUROPEAN PATENT SPECIFICATION

(11) **EP 1 187 532 B1**
(45) Date of publication and mention of the grant of the patent: **06.08.2003**
(21) Application number: 00941576.1
(22) Date of filing: 20.06.2000
(51) Int. Cl.: A01N 43/78, A01N 43/82, A01N 33/18, A01N 25/22

(54) **HERBICIDAL EMULSIFIABLE CONCENTRATE COMPOSITIONS OF DINITROANILINE AND OXYACETAMIDE HERBICIDES**
EMULSIONSKONZENTRAT ENTHALTEND DINITROANILIN UND OXYACETAMID HERBIZIDE
COMPOSITIONS HERBICIDES EMULSIFIABLES CONCENTREES CONTENANT DES HERBICIDES DE DINITROANILINE ET D'OXYACETAMIDE

(30) Priority: 22.06.1999 US 337911
(43) Date of publication of application: 20.03.2002
(73) Proprietor: BASF AKTIENGESELLSCHAFT, 67056 Ludwigshafen (DE)
(72) Inventor: BAKER, Ivor, Philip, Southampton, Hampshire S016 3JA (GB)
(86) International application number: US0016947
(87) International publication number: WO00078148

(56) References cited:
- EP-A- 0 496 989
- WO-A-94/02014
- DE-A- 19 720 367

## Description

### BACKGROUND OF THE INVENTION

Dinitroaniline herbicides such as pendimethalin and trifluralin, and oxyacetamide herbicides such as fluthiamid are known in the art. Combination treatments using these types of herbicides are disclosed in U.S. Patents 4,968,342 and 5,759,955; and in German Application No. 19720367. However, emulsifiable concentrate compositions comprising dinitroaniline and oxyacetamide herbicides are not known in the art.

U.S. Patent 3,898,075 relates to stabilized liquid compositions containing *m*-biscarbamates and organic acids. U.S. Patent 2,954,396 describes a method for stabilizing carbamate esters with certain hydrolysis inhibitors. However, neither U.S. Patent 3,898,075 nor U.S. Patent 2,954,396 describe any method for the stabilization of oxyacetamide herbicides.

It is therefore an object of the present invention to provide stable emulsifiable concentrate compositions of dinitroaniline herbicides and oxyacetamide herbicides.

Other objects and advantages of the present invention will be apparent to those skilled in the art from the description below and the appended claims.

### SUMMARY OF THE INVENTION

The present invention relates to a herbicidal emulsifiable concentrate composition comprising, on a weight to weight basis, about 15% to 40% of a dinitroaniline herbicide, about 1% to 10% of an oxyacetamide herbicide, about 0.01% to 1% phosphoric acid, up to about 30% of an emulsifier or mixture of emulsifiers, up to about 1% of an antifoaming agent, and an organic solvent or mixture of organic solvents.

### DETAILED DESCRIPTION OF THE INVENTION

The herbicidal emulsifiable concentrate compositions of this invention comprise, on a weight to weight basis, about 15% to 40% of a dinitroaniline herbicide, about 1% to 10% of an oxyacetamide herbicide, about 0.01% to 1% phosphoric acid, up to about 30% of an emulsifier or mixture of emulsifiers, up to about 1% of an antifoaming agent, and an organic solvent or mixture of organic solvents.

Preferred herbicidal emulsifiable concentrate compositions of the present invention are those comprising, on a weight to weight basis, about 15% to 40% of a dinitroaniline herbicide, about 1% to 10% of an oxyacetamide herbicide, about 0.01% to 1% phosphoric acid, about 2% to 10% of an alkylarylsufonate, about 0.5% to 5% of a polyalkylene glycol ether, about 1% to 5% of an ethoxylated fatty alcohol, up to about 1% of an antifoaming agent, and an aromatic hydrocarbon solvent having a distillation range of about 135°C to 305°C.

More preferred emulsifiable concentrate compositions of this invention are those comprising, on a weight to weight basis, about 25% to 35% pendimethalin, about 4% to 8% fluthiamid, about 0.05% to 0.2% phosphoric acid, about 2% to 6% of a dodecylbenzenesulfonate, about 1% to 3% of an alkyl capped ethylene oxide/propylene oxide block copolymer, about 1% to 5% of an ethoxylated C₁₀-C₁₆fatty alcohol having about 8 to 12 moles of ethylene oxide per mole, up to about 1% of an antifoaming agent, and an aromatic hydrocarbon solvent having a distillation range of about 135° to 305°C.

Phosphoric acid is an especially important element of the present compositions because it has been found that oxyacetamide herbicides are more stable in the phosphoric acid containing emulsifiable concentrate compositions of the present invention than in corresponding emulsifiable concentrate compositions which do not contain phosphoric acid. In a preferred embodiment of the present invention, the ratio of the oxyacetamide herbicide to the phosphoric acid, on a weight basis, is preferably about 30:1 to 100:1, and more preferably, is about 40:1 to 70:1.

Dinitroaniline herbicides suitable for use in the compositions of this invention have the structural formula I 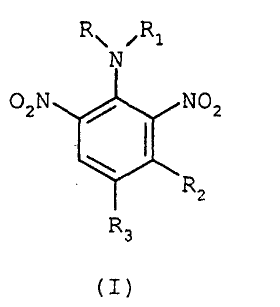 wherein
- R: is hydrogen, C₂-C₄alkyl or chloroethyl;
- R₁: is C₂-C₅alkyl, chloroethyl, 2-methallyl or cyclopropylmethyl;
- R₂: is hydrogen, methyl or amino; and
- R₃: is trifluoromethyl, C₁-C₃alkyl, SO₂NH₂ or SO₂CH₃.

Preferred dinitroaniline herbicides for use in this invention include pendimethalin and trifluralin with pendimethalin being more preferred.

Oxyacetamide herbicides suitable for use in the compositions of the present invention are those described in U.S. Patent Nos. 4,408,055; 4,509,971; 4,540,430; 4,549,899; 4,585,471; 4,645,525; 4,756,741; 4,784,682; 4,788,291; 4,833,243; 4,968,342; 4,988,380; 5,090,991 and 5,234,896; EP Application Nos. 300344-A and 500934-A1; and WO 97/08160.

Preferred oxyacetamide herbicides for use in the compositions of this invention have the structural formula II 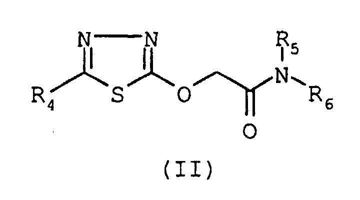 wherein
- R₄: is hydrogen, F, Cl, Br, C₁-C₄alkyl, C₁-C₄haloalkyl, C₁-C₄alkoxy, C₁-C₄haloalkoxy, C₁-C₄alkylsulfonyl or C₁-C₄haloalkylsulfonyl;
- R₅: is hydrogen or C₁-C₆alkyl; and
- R₆: is phenyl optionally substituted with any combination of from one to three F, Cl, Br, CN, NO₂, C₁- C₄alkyl,
C₁-C₄haloalkyl, C₁-C₄alkoxy or C₁-C₄haloalkoxy groups.

More preferred oxyacetamide herbicides for use in the emulsifiable concentrate compositions of this invention are those wherein
- R₄: is C₁-C₄haloalkyl;
- R₅: is C₁-C₄alkyl; and
- R₆: is phenyl optionally substituted with any combination of one or two F, Cl or C₁-C₄alkyl groups.

Most preferred oxyacetamide herbicides are those of formula II wherein
- R₄: is CF₃, CHF₂ or CFCl₂;
- R₅: is isopropyl; and
- R₆: is selected from the group consisting of phenyl, 3-chlorophenyl, 4-chlorophenyl, 2-fluorophenyl, 4-fluorophenyl, 2-methylphenyl, 3-methylphenyl, 4-methylphenyl and 3,4-dimethylphenyl.

An oxyacetamide herbicide which is especially suitable for use in the compositions of this invention is 4'-fluoro-N-isopropyl-2-{[5-(trifluoromethyl)-1,3,4-thiadiazol-2-yl]oxy}acetanilide (fluthiamid).

Emulsifiers suitable for use in the compositions of the present invention include, but are not limited to, alkylarylsulfonates including C₈-C₁₈alkylbenzenesulfonates such as calcium dodecylbenzenesulfonate; polyalkylene glycol ethers including alkyl capped ethylene oxide/propylene oxide block copolymers such as butyl capped ethylene oxide/propylene oxide block copolymers; and ethoxylated fatty alcohols including ethoxylated
C₁₀-C₁₆fatty alcohols having about 8 to 12 moles of ethylene oxide per mole; and mixtures thereof. Preferred emulsifiers include the alkali metal or alkaline earth metal salts of dodecylbenzene sulfonic acid, such as calcium dodecylbenzenesulfonate including SOPROPHOR® 70 a 60% calcium dodecylbenzene sulfonate solution in isobutanol commercially available from Rhodia, Milan, Italy; butyl capped ethylene oxide/propylene oxide block copolymers including WITCONOL® NS 500K a butyl capped ethylene oxide/propylene oxide block copolymer commerically available from Witco SA, Saint-Pierre Les Elbeuf, France; and ethoxylated C₁₀-C₁₆fatty alcohols having about 8 to 12 moles of ethylene oxide per mole including RHODASURF® 870 a C₁₃ ethoxylated fatty alcohol containing 10 moles of ethylene oxide per mole commercially available from Rhodia, Milan, Italy; and mixtures thereof.

Organic solvents suitable for use in the compositions of this invention include aromatic hydrocarbon solvents such as toluene, xylenes, polynuclear aromatic hydrocarbons such as naphthalenes and alkylnaphthalenes and mixtures thereof, many of which are available from the fractionation of crude oil and in general have distillation ranges in the temperature range of about 135°C to 305°C, with those having a distillation range of from about 183°C to 290°C being most preferred. These solvents are commercially available under a variety of tradenames, e.g. SOLVESSO® 200 and AROMATIC® 200 both commercially available from Exxon, Fareham, Hants, United Kingdom.

Antifoaming agents suitable for use in the compositions of the present invention include conventional antifoaming agents, with silicone based antifoaming agents such as those sold under the SILCOLAPSE® tradename commercially available from Rhodia, Lyon, France being preferred. In a preferred embodiment of this invention, an antifoaming agent is used at a level sufficient to prevent undesirable foaming during the preparation of tank mixes using the emulsion concentrates of the present invention. Typically, less than 1% by weight of a defoamer is sufficient, with amounts of about 0.01 to about 0.1% by weight being preferred.

The herbicidal emulsifiable concentrate compositions of the present invention may be prepared by admixing all of the ingredients in the organic solvent. In a preferred embodiment of this invention, the compositions are prepared by:
(a) admixing an alkylarylsulfonate, an ethoxylated fatty alcohol, an antifoaming agent and an organic solvent to obtain a first homogeneous mixture;
(b) adding a molten dinitroaniline and a molten polyalkylene glycol ether to the first homogenous mixture of step (a) with stirring to obtain a second homogenous mixture;
(c) adding an oxyacetamide herbicide to the second homogenous mixture of step (b) with stirring to obtain a third homogenous mixture; and
(d) adding phosphoric acid to the third homogenous mixture of step (c) with stirring.

The emulsifiable concentrate compositions of this invention are diluted with water and applied as dilute, aqueous emulsions to the locus where weed control is desired. Typical dilution rates are in the range of about 1 L of concentrate per 400 L of water to 4 L of concentrate per 100 L of water. While the compositions of this invention are effective for controlling weeds when employed alone, they may also be used in conjunction with or in combination with other biological chemicals, including other herbicides.

In order to facilitate a further understanding of the invention, the following examples are presented primarily for the purpose of illustrating more specific details thereof. The scope of the invention should not be deemed limited by the examples, but encompasses the entire subject matter defined in the claims.

### EXAMPLE 1

### Preparation of emulsifiable concentrate compositions

A mixture of a 60% calcium dodecylbenzene sulfonate solution in isobutanol commercially available as SOPROPHOR® 70 from Rhodia, Milan, Italy (53.0g, 5.00% on a weight basis), a C₁₃ ethoxylated fatty alcohol containing 10 moles of ethylene oxide per mole commercially available as RHODASURF® 870 from Rhodia, Milan, Italy (32.0g 3.00% on a weight basis), a silicone antifoam commercially available as SILCOLAPSE® 431 from Rhodia, Lyon, France (0.1g, 0.01% on a weight basis), and an aromatic hydrocarbon mixture (C₁₀-C₁₃)aromatics having a distillation range of about 226-279°C commercially available as SOLVESSO® 200 from Exxon, Fareham, Hants, United Kingdom (557.0g, 52.29% on a weight basis) is stirred until homogeneous. Molten pendimethalin (333.3g, 90% real, 31.33% on a weight basis) and a molten butyl capped ethylene oxide/propylene oxide block copolymer commercially available as WITCONOL® NS 500K from Witco SA, Saint-Pierre Les Elbeuf, France (21.0g, 2.00% on a weight basis) are added to the mixture with stirring. Solid fluthiamid (66.7g, 90% real, 6.27% on a weight basis) is then added to the mixture and the mixture is stirred until all of the solids dissolve. An 85% phosphoric acid solution (1.0g, 0.10% on a weight basis) is added to the mixture, with stirring until homogeneous, to obtain the emulsifiable concentrate composition identified as composition number 1 in Table I.

Using essentially the same procedure, the emulsifiable concentrate compositions identified as composition numbers 2 to 14 in Table I are obtained.

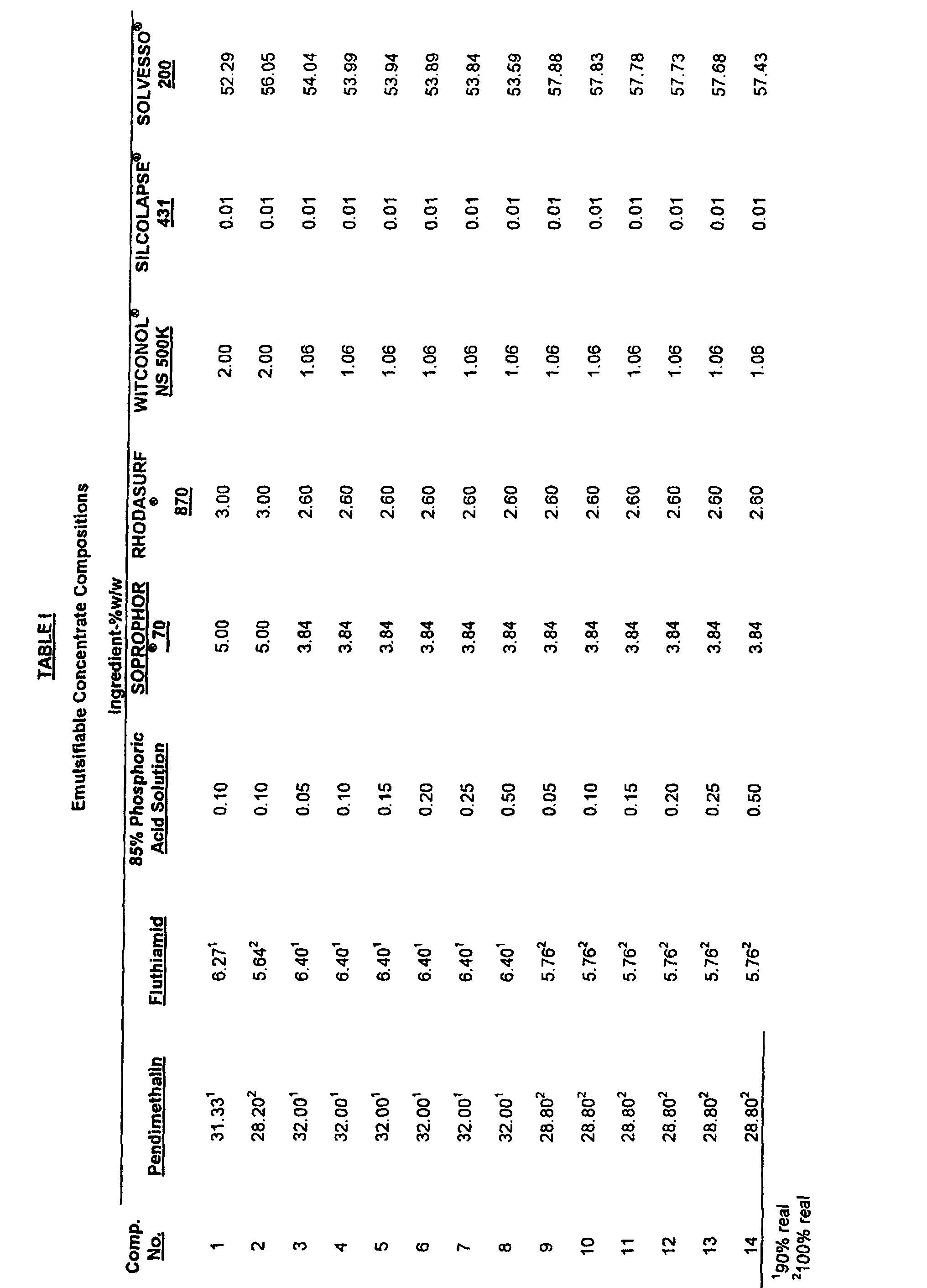

### EXAMPLE 2

### Evaluation of storage stability of test compositions

Samples of test compositions identified in Table I and a comparative composition identified below are placed in glass bottles. The bottles are capped and placed in a temperature controlled storage incubator. After completing the required storage period, the samples are removed and assayed for pendimethalin and fluthiamid content. The active ingredient content is expressed as a percentage relative to the active ingredient content prior to storage (% Initial Content). The results are summarized in Table II.

As can be seen from the data in Table II, fluthiamid is more stable in the emulsifiable concentrate compositions of the present invention which contain phosphoric acid than the comparative emulsifiable concentrate composition which does not contain phosphoric acid.

| **COMPARATIVE COMPOSITION**^{**1**} | |
|---|---|
| **Ingredient** | **%w/w** |
| Pendimethalin (90% real) | 32.00 |
| Fluthiamid (90% real) | 6.40 |
| SOPROPHOR® 70 | 3.84 |
| RHODASURF® 870 | 2.60 |
| WITCONOL® NS 500K | 1.06 |
| SILCOLAPSE® 431 | 0.01 |
| SOLVESSO® 200 | 54.09 |

| | |
|---|---|
| ¹Prepared according to the procedure described in Example 1 except that the 85% phosphoric acid solution is not added. | |

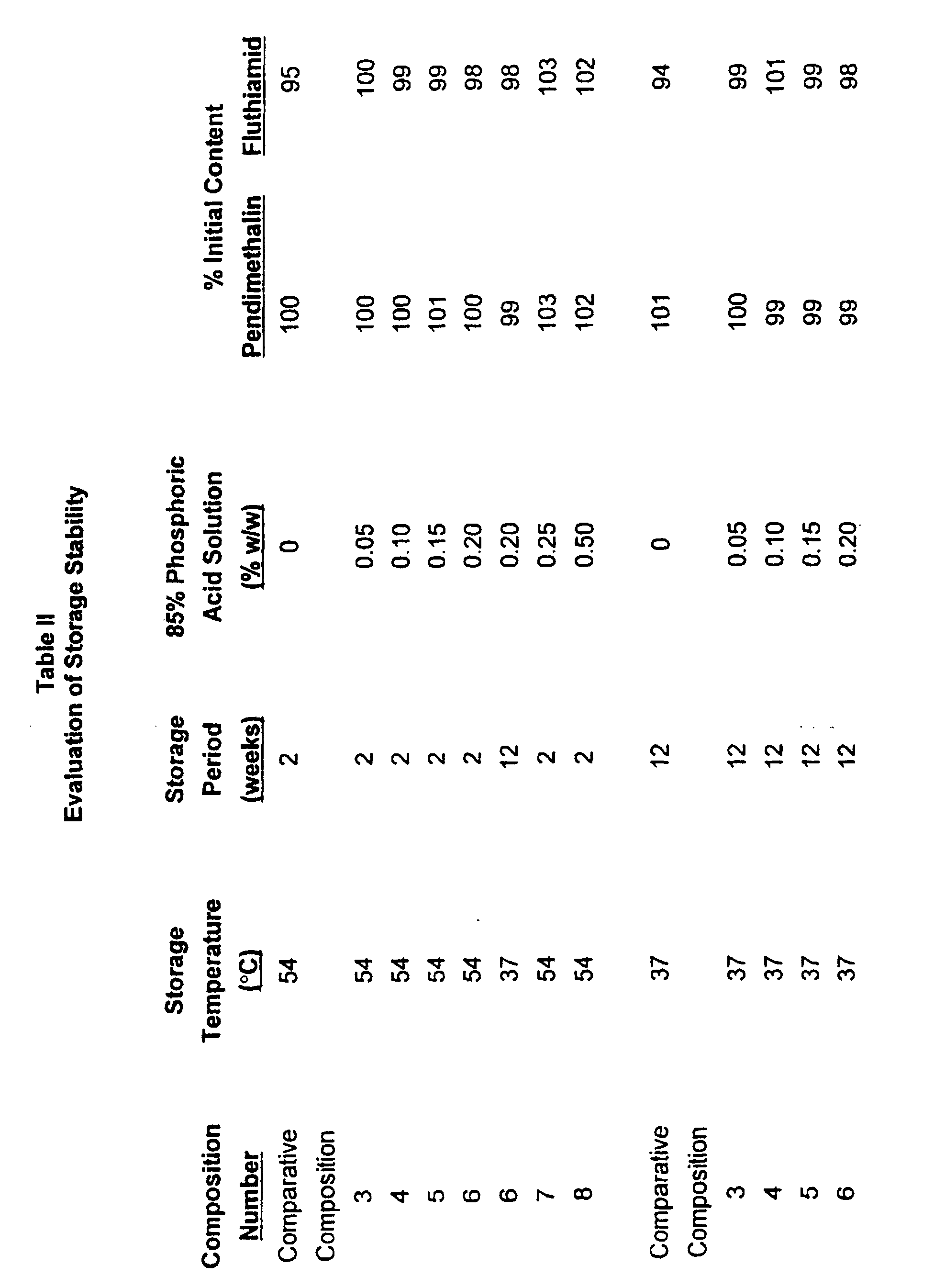

## Claims

1. A herbicidal emulsifiable concentrate composition which comprises, on a weight to weight basis, about 15% to 40% of a dinitroaniline herbicide, about 1% to 10% of an oxyacetamide herbicide, about 0.01% to 1% phosphoric acid, up to about 30% of an emulsifier or mixture of emulsifiers, up to about 1% of an antifoaming agent, and an organic solvent or mixture of organic solvents.

2. The composition according to Claim 1 wherein the emulsifier or mixture of emulsifiers comprises about 2% to 10% of an alkylarylsulfonate, about 0.5% to 5% of a polyalkylene glycol ether and about 1% to 5% of an ethoxylated fatty alcohol, and the orgainc solvent or mixture of organic solvents is an aromatic hydrocarbon solvent having a distillation range of about 135°C to 305°C.

3. The composition according to Claim 1 which comprises, on a weight to weight basis, about 25% to 35% pendimethalin, about 4% to 8% fluthiamid, about 0.05% to 0.2% phosphoric acid, about 2% to 6% of a dodecylbenzenesulfonate, about 1% to 3% of an alkyl capped ethylene oxide/propylene oxide block copolymer, about 1% to 5% of an ethoxylated C₁₀-C₁₆fatty alcohol having about 8 to 12 moles of ethylene oxide per mole, up to about 1% of an antifoaming agent, and an aromatic hydrocarbon solvent having a distillation range of about 135°C to 305°C.

4. The composition according to Claim 1 wherein the ratio of the oxyacetamide herbicide to the phosphoric acid on a weight basis is about 30:1 to 100:1.

5. The composition according to Claim 4 wherein the ratio is about 40:1 to 70:1.

6. The composition according to Claim 1 wherein the emulsifier is selected from the group consisting of an alkylarylsufonate, a polyalkylene glycol ether, and an ethoxylated fatty alcohol, and mixtures thereof.

7. The composition according to Claim 6 wherein the alkylarylsulfonate is a C₈-C₁₈alkylbenzenesulfonate; the polyalkylene glycol ether is an alkyl capped ethylene oxide/propylene oxide block copolymer, and the ethoxylated fatty alcohol is an ethoxylated C₁₀-C₁₆fatty alcohol having about 8 to 12 moles of ethylene oxide per mole.

8. The composition according to Claim 1 wherein the antifoaming agent is present.

9. The composition according to Claim 1 wherein the dinitroaniline herbicide has the structural formula I 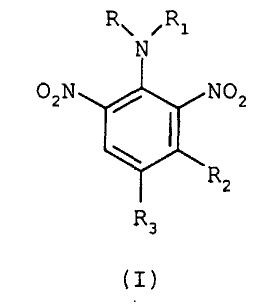 wherein
R is hydrogen, C₂-C₄alkyl or chloroethyl;
R₁ is C₂-C₅alkyl, chloroethyl, 2-methallyl or cyclopropylmethyl;
R₂ is hydrogen, methyl or amino; and
R₃ is trifluoromethyl, C₁-C₃alkyl, SO₂NH₂ or SO₂CH₃.

10. The composition according to Claim 1 wherein the dinitroaniline herbicide is selected from the group consisting of pendimethalin and trifluralin.

11. The composition according to Claim 1 wherein the dinitroaniline herbicide is pendimethalin.

12. The composition according to Claim 1 wherein the oxyacetamide herbicide has the structural formula II 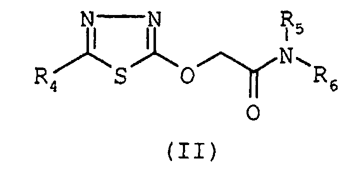 wherein
R₄ is hydrogen, F, Cl, Br, C₁-C₄alkyl, C₁-C₄haloalkyl, C₁-C₄alkoxy, C₁-C₄haloalkoxy, C₁-C₄alkylsulfonyl or C₁-C₄haloalkylsulfonyl;
R₅ is hydrogen or C₁-C₆alkyl; and
R₆ is phenyl optionally substituted with any combination of from one to three F, Cl, Br, CN, NO₂, C₁-C₄alkyl, C₁-C₄haloalkyl, C₁-C₄alkoxy or C₁-C₄haloalkoxy groups.

13. The composition according to Claim 12 wherein
R₄ is C₁-C₄haloalkyl;
R₅ is C₁-C₄alkyl; and
R₆ is phenyl optionally substituted with any combination of one or two F, Cl or C₁-C₄alkyl groups.

14. The composition according to Claim 13 wherein
R₄ is CF₃, CHF₂ or CFCl₂;
R₅ is isopropyl; and
R₆ is selected from the group consisting of phenyl, 3-chlorophenyl, 4-chlorophenyl, 2-fluorophenyl, 4-fluorophenyl, 2-methylphenyl, 3-methylphenyl, 4-methylphenyl and 3,4-dimethylphenyl.

15. The composition according to Claim 1 wherein the oxyacetamide herbicide is fluthiamid.

16. The composition according to Claim 1 wherein the organic solvent is an aromatic hydrocarbon solvent having a distillation range of about 135°C to 305°C.

17. The composition according to Claim 16 wherein the distillation range is about 183°C to 290°C.

18. An aqueous tank mixture which comprises water and a composition as described in Claim 1.

## Patentansprüche

1. Herbizide emulgierbare Konzentratzusammensetzung, die einen Massenanteil von ungefähr 15% bis 40% eines Dinitroanilinherbizids, ungefähr 1% bis 10% eines Oxyacetamidherbizids, ungefähr 0,01% bis 1% Phosphorsäure, bis zu ungefähr 30% eines Emulgators oder einer Emulgatormischung, bis zu ungefähr 1% eines Entschäumers sowie ein organisches Lösungsmittel oder eine Mischung organischer Lösungsmittel enthält.

2. Zusammensetzung nach Anspruch 1, wobei der Emulgator bzw. die Emulgatormischung ungefähr 2% bis 10% eines Alkylarylsulfonats, ungefähr 0,5% bis 5% eines Polyalkylenglykolethers und ungefähr 1% bis 5% eines ethoxylierten Fettalkohols enthält und es sich bei dem organischen Lösungsmittel bzw. der Mischung organischer Lösungsmittel um ein aromatisches Kohlenwasserstofflösungsmittel mit einem Siedebereich von ungefähr 135°C bis 305°C handelt.

3. Zusammensetzung nach Anspruch 1, die einen Massenanteil von ungefähr 25% bis 35% Pendimethalin, ungefähr 4% bis 8% Fluthiamid, ungefähr 0,05% bis 0,2% Phosphorsäure, ungefähr 2% bis 6% eines Dodecylbenzolsulfonats, ungefähr 1% bis 3% eines Ethylenoxid-Propylenoxid-Blockcopolymers mit alkylverschlossenen Endgruppen, ungefähr 1% bis 5% eines ethoxylierten C₁₀-C₁₆-Fettalkohols mit ungefähr 8 bis 12 mol Ethylenoxid pro mol, bis zu ungefähr 1% eines Entschäumers sowie ein aromatisches Kohlenwasserstofflösungsmittel mit einem Siedebereich von ungefähr 135°C bis 305°C enthält.

4. Zusammensetzung nach Anspruch 1, wobei das Verhältnis zwischen Oxyacetamidherbizid zu Phosphorsäure ungefähr 30:1 bis 100:1 in bezug auf das Gewicht beträgt.

5. Zusammensetzung nach Anspruch 4, wobei dieses Verhältnis ungefähr 40:1 bis 70:1 beträgt.

6. Zusammensetzung nach Anspruch 1, wobei der Emulgator aus der Gruppe Alkylarylsulfonat, Polyalkylenglykolether und ethoxylierter Fettalkohol sowie deren Mischungen stammt.

7. Zusammensetzung nach Anspruch 6, wobei es sich bei dem Alkylarylsulfonat um ein C₈-C₁₈-Alkylbenzolsulfonat, bei dem Polyalkylenglykolether um ein Ethylenoxid-Propylenoxid-Blockcopolymer mit alkylverschlossenen Endgruppen und dem ethoxylierten Fettalkohol um einen ethoxylierten C₁₀-C₁₆-Fettalkohol mit ungefähr 8 bis 12 mol Ethylenoxid pro mol handelt.

8. Zusammensetzung nach Anspruch 1, wobei der Entschäumer vorhanden ist.

9. Zusammensetzung nach Anspruch 1, wobei das Dinitroanilinherbizid die Strukturformel I aufweist 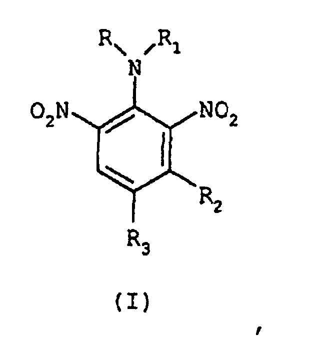 in der
R Wasserstoff, C₂-C₄-Alkyl oder Chlorethyl bedeutet,
R₁ C₂-C₅-Alkyl, Chlorethyl, 2-Methallyl oder Cyclo-propylmethyl bedeutet,
R₂ Wasserstoff, Methyl oder Amino bedeutet und
R₃ Trifluormethyl, C₁-C₃-Alkyl, SO₂NH₂ oder SO₂CH₃ bedeutet.

10. Zusammensetzung nach Anspruch 1, wobei das Dinitroanilinherbizid aus der Gruppe Pendimethalin und Trifluralin stammt.

11. Zusammensetzung nach Anspruch 1, wobei es sich bei dem Dinitroanilinherbizid um Pendimethalin handelt.

12. Zusammensetzung nach Anspruch 1, wobei das Oxyacetamidherbizid die Strukturformel II aufweist 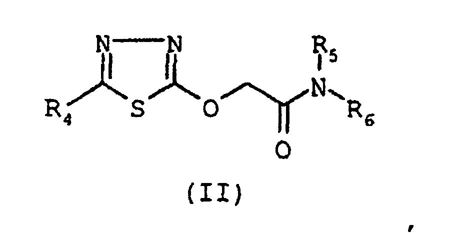 in der
R₄ Wasserstoff, F, Cl, Br, C₁-C₄-Alkyl, C₁-C₄-Halogenalkyl, C₁-C₄-Alkoxy, C₁-C₄-Halogen-alkoxy, C₁-C₄-Alkylsulfonyl oder C₁-C₄-Halogen-alkylsulfonyl bedeutet,
R₅ Wasserstoff oder C₁-C₆-Alkyl bedeutet und
R₆ Phenyl, das gegebenenfalls durch eine beliebige Kombination aus ein bis drei F-, Cl-, Br-, CN-, NO₂-, C₁-C₄-Alkyl-, C₁-C₄-Halogenalkyl-, C₁-C₄-Alkoxy- oder C₁-C₄-Halogenalkoxygruppen substituiert ist, bedeutet.

13. Zusammensetzung nach Anspruch 12, wobei
R₄ C₁-C₄-Halogenalkyl bedeutet,
R₅ C₁-C₄-Alkyl bedeutet und
R₆ Phenyl, das gegebenenfalls durch eine beliebige Kombination aus ein oder zwei F-, Cl- oder C₁-C₄-Alkylgruppen substituiert ist, bedeutet.

14. Zusammensetzung nach Anspruch 13, wobei
R₄ CF₃, CHF₂ oder CFCl₂ bedeutet,
R₅ Isopropyl bedeutet und
R₆ aus der Gruppe Phenyl, 3-Chlorphenyl, 4-Chlorphenyl, 2-Fluorphenyl, 4-Fluorphenyl, 2-Methylphenyl, 3-Methylphenyl, 4-Methylphenyl und 3,4-Dimethylphenyl stammt.

15. Zusammensetzung nach Anspruch 1, wobei es sich bei dem Oxyacetamidherbizid um Fluthiamid handelt.

16. Zusammensetzung nach Anspruch 1, wobei es sich bei dem organischen Lösungsmittel um ein aromatisches Kohlenwasserstofflösungsmittel mit einem Siedebereich von ungefähr 135°C bis 305°C handelt.

17. Zusammensetzung nach Anspruch 16, wobei der Siedebereich ungefähr 183°C bis 290°C umfaßt.

18. Wäßrige Tankmischung, die Wasser und eine wie in Anspruch 1 beschriebene Zusammensetzung enthält.

## Revendications

1. Composition herbicide émulsifiable concentrée qui comprend, sur une base poids/poids, environ 15% à 40% d'un herbicide de la famille des dinitroanilines, environ 1% à 10% d'un herbicide de la famille des oxyacétamides, environ 0,01% à 1% d'acide phosphorique, jusqu'à environ 30% d'un émulsifiant ou d'un mélange d'émulsifiants, jusqu'à environ 1% d'un agent anti-mousse, et un solvant organique ou un mélange de solvants organiques.

2. Composition selon la revendication 1, dans laquelle l'émutsifiant ou le mélange d'émulsifiants comprend environ 2% à 10% d'un alkylarylsulfonate, environ 0,5% à 5% d'un éther de polyalkylène glycol et environ 1% à 5% d'un alcool gras éthoxylé, et le solvant organique ou le mélange de solvants organiques est un solvant de type hydrocarbure aromatique ayant un intervalle de distillation d'environ 135°C à 305°C.

3. Composition selon la revendication 1, qui comprend, sur une base poids/poids, environ 25% à 35% de pendiméthaline, environ 4% à 8% de fluthiamide, environ 0,05% à 0,2% d'acide phosphorique, environ 2% à 6% d'un dodécylbenzènesulfonate, environ 1% à 3% d'un copolymère en bloc d'oxyde d'éthylène/oxyde de propylène dont les groupes terminaux sont coiffés par des groupes alkyles, environ 1% à 5% d'un alcool gras éthoxylé en C₁₀-C₁₆ comprenant environ 8 à 12 moles d'oxyde d'éthylène par mole, jusqu'à 1% d'un agent anti-mousse, et un solvant de type hydrocarbure aromatique ayant un intervalle de distillation d'environ 135°C à 305°C.

4. Composition selon la revendication 1, dans laquelle le rapport entre l'herbicide de la famille des oxyacétamides et l'acide phosphorique, sur une base poids/poids, est d'environ 30:1 à 100:1.

5. Composition selon la revendication 4, dans laquelle le rapport est d'environ 40:1 à 70:1.

6. Composition selon la revendication 1, dans laquelle l'émulsifiant est sélectionné parmi le groupe comprenant un alkylarylsulfonate, un éther de polyalkytène glycol et un alcool gras éthoxylé, ainsi que des mélanges de ceux-ci.

7. Composition selon la revendication 6, dans laquelle l'alkylarylsulfonate est un alkylbenzènesulfonate en C₈-C₁₈; l'éther de polyalkylène glycol est un copolymère en bloc d'oxyde d'éthylène et d'oxyde de propylène dont les groupes terminaux sont coiffés par des groupes alkyles, et l'alcool gras éthoxylé est un alcool gras éthoxylé en C₁₀-C₁₆ comprenant environ 8 à 12 moles d'oxyde d'éthylène par mole.

8. Composition selon la revendication 1, dans laquelle l'agent anti-mousse est présent.

9. Composition selon la revendication 1, dans laquelle l'herbicide de la famille des dinitroanilines répond à la formule structurale I 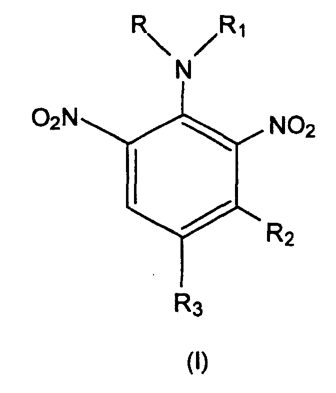 dans laquelle
R représente un atome d'hydrogène, un groupe alkyle en C₂-C₄ ou un groupe chloroéthyle;
R₁ représente un groupe alkyle en C₂-C₅, un groupe chloroéthyle, un groupe méthylallyle ou un groupe cyclopropylméthyle;
R₂ représente un atome d'hydrogène, un groupe méthyle ou amino; et
R₃ représente un groupe trifluorométhyle, un groupe alkyle en C₁-C₃, un groupe SO₂NH₂ ou un groupe SO₂CH₃.

10. Composition selon la revendication 1, dans laquelle l'herbicide de la famille des dinitroanilines est sélectionné parmi un groupe comprenant la pendiméthaline et la trifluraline.

11. Composition selon la revendication 1, dans laquelle l'herbicide de la famille des dinitroanilines est la pendiméthaline.

12. Composition selon la revendication 1, dans laquelle l'herbicide de la famille des oxyacétamides répond à la formule structurale II 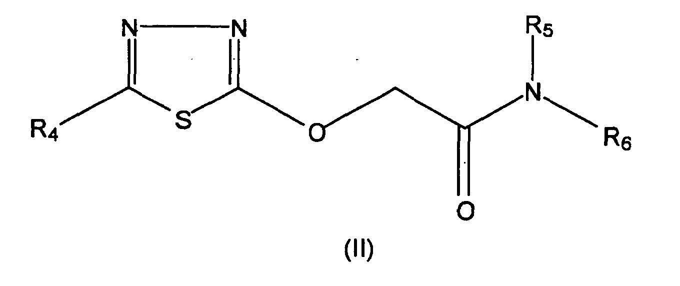 dans laquelle
R₄ représente un atome d'hydrogène, F, Cl, Br, un groupe alkyle en C₁-C₄, un groupe haloalkyle en C₁-C₄, un groupe alcoxy en C₁-C₄, un groupe haloalcoxy en C₁-C₄, un groupe alkylsulfonyle en C₁-C₄ ou un groupe haloalkylsulfonyle en C₁-C₄;
R₅ représente un atome d'hydrogène ou un groupe alkyle en C₁-C₆; et
R₆ est un groupe phényle facultativement substitué par n'importe quelle combinaison de un à trois groupes choisis parmi F, Cl, Br, CN, NO₂, un groupe alkyle en C₁-C₄, un groupe haloalkyle en C₁-C₄, un groupe alcoxy en C₁-C₄ ou un groupe haloalcoxy en C₁-C₄.

13. Composition selon la revendication 12, dans laquelle
R₄ représente un groupe haloalkyle en C₁-C₄;
R₅ représente un groupe alkyle en C₁-C₄; et
R₆ représente un groupe phényle facultativement substitué par n'importe quelle combinaison de un ou deux groupes choisis parmi F, Cl, ou un groupe alkyle en C₁-C₄.

14. Composition selon la revendication 13, dans laquelle
R₄ représente CF₃, CHF₂ ou CFCl₂;
R₅ représente un groupe isopropyle; et
R₆ est choisi parmi le groupe comprenant les groupes phényle, 3-chlorophényle, 4-chlorophényle, 2-fluorophényle, 4-fluorophényle, 2-méthylphényle, 3-méthylphényle, 4-méthylphényle et 3,4-diméthylphényle.

15. Composition selon la revendication 1, dans laquelle l'herbicide de la famille des oxyacétamides est le fluthiamide.

16. Composition selon la revendication 1, dans laquelle le solvant aromatique est un solvant de type hydrocarbure aromatique ayant un intervalle de distillation d'environ 135°C à 305°C.

17. Composition selon la revendication 16, dans laquelle l'intervalle de distillation est d'environ 183°C à 290°C.

18. Un mélange aqueux en cuve qui comprend de l'eau et une composition telle que décrite dans la revendication 1.
